# FASCICULE DE BREVET EUROPEEN

(11) **EP 0 799 721 B1**
(45) Date de publication et mention de la délivrance du brevet: **04.10.2001**
(21) Numéro de dépôt: 97104771.7
(22) Date de dépôt: 20.03.1997
(51) Int. Cl.: B60B 5/02, B60B 21/02

(54) **Roue pour véhicules automobiles**
Rad für Fahrzeuge
Wheel for motor vehicles

(30) Priorité: 02.04.1996 FR 9604299
(43) Date de publication de la demande: 08.10.1997
(73) Titulaire: COMPAGNIE GENERALE DES ETABLISSEMENTS MICHELIN-MICHELIN & CIE, F-63040 Clermont-Ferrand Cédex 01 (FR)
(72) Inventeur: Vaxelaire, Alain, 63540 Romagnat (FR)
(74) Mandataire: Dequire, Philippe Jean-Marie Denis

(56) Documents cités:
- EP-A- 0 032 747
- WO-A-93/01946
- AU-B- 524 458
- US-A- 4 105 255
- US-A- 4 436 133
- PATENT ABSTRACTS OF JAPAN vol. 015, no. 457 (M-1181), 20 Novembre 1991 & JP 03 193501 A (CHUO SEIKI KK), 23 Août 1991,

## Description

L'invention concerne une roue pour véhicules automobiles.

Les roues pour véhicules automobiles sont généralement constituées par deux pièces en acier, le disque et la jante, réalisées par compression ou formage de profilés puis assemblées par soudage. L'emploi de l'acier permet l'obtention de très bonnes performances mécaniques et thermiques mais avec des roues lourdes. Or avec l'accent mis actuellement sur les économies d'énergie, une grande préoccupation des constructeurs automobiles est de réduire la masse des éléments de l'automobile tels que les roues dans le but de diminuer la consommation d'essence et d'améliorer la maniabilité des véhicules.

L'utilisation de matériau composite a été proposée pour réaliser un gain de masse important, mais il peut être difficile d'obtenir des caractéristiques mécaniques suffisantes dans les roues obtenues et, de plus, se posent des problèmes d'évacuation de l'énergie thermique transmise par les disques de freins.

C'est pourquoi se développent d'autres solutions telles que des roues, qu'on nommera "hybrides" dans ce qui suit, qui comprennent un disque métallique assurant à la fois les caractéristiques de résistance et de conduction thermique et une jante en matériau composite permettant de réaliser un gain de poids.

Une roue ayant les caractéristiques du préambule de la revendication 1 est décrite dans le document AU-B-524 458.

Mais la réalisation de telles roues a fait apparaître un problème nouveau qui réside dans la déformation de l'ensemble de la jante, sous l'effet de la pression de gonflage du pneumatique et des contraintes extérieures s'exerçant au cours du roulage, qui est bien plus importante lorsque la jante est réalisée dans un matériau composite que dans un métal.

La demanderesse a constaté de façon surprenante qu'une répartition spécifique des masses au sein de la jante permettait de pallier cet inconvénient.

La roue selon l'invention, comprenant une jante en matériau composite et un disque métallique assemblés l'un avec l'autre, est caractérisée par le fait que la jante porte des rebords d'accrochage dont l'un au moins possède une section axiale présentant au moins une cavité en U.

Cette nouvelle structure d'un rebord d'accrochage confère à la roue, au niveau de cette extrémité, une plus grande inertie et une section axiale de surface plus importante, permettant d'obtenir une meilleure rigidité. Cette nouvelle structure peut être avantageusement réalisée pour chacun des rebords d'accrochage.

Afin de réaliser une telle structure avec précision, la jante est réalisée par moulage.

D'autres caractéristiques et avantages de l'invention apparaîtront à la lecture d'un exemple de réalisation d'une roue conforme à l'invention en référence aux dessins dans lesquels :
- la figure 1 est une coupe axiale de la roue conforme à l'invention,
- la figure 2 est un grossissement du détail A de la figure 1 selon une première variante de réalisation de la roue représentée à ladite figure 1,
- la figure 3 est un grossissement du détail A de la figure 1 selon une deuxième variante de réalisation de la roue représentée à ladite figure 1.

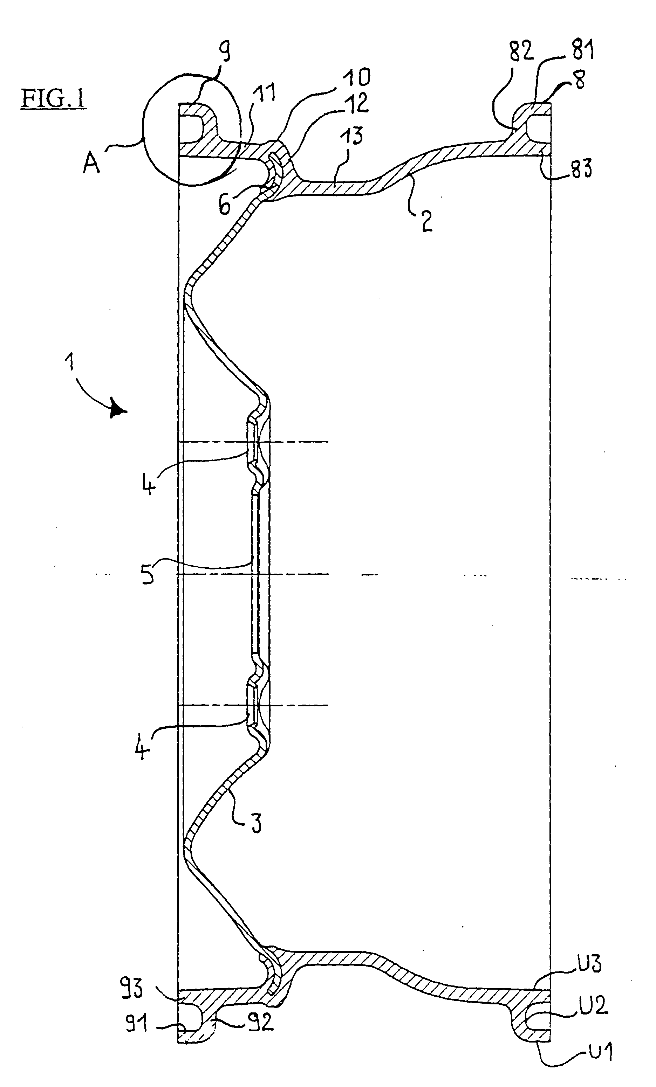

Selon la figure 1, la roue 1 comporte une jante 2 et un disque 3 assemblés l'un avec l'autre.

Le disque 3 porte des trous 4, dans sa partie centrale, destinés à la fixation de la roue sur un moyeu non représenté ainsi qu'une ouverture 5 de centrage de la roue 1 par rapport audit moyeu. Le disque 3 comporte également un bord périphérique 6 d'assemblage avec la jante 2.

La jante 2 de forme cylindrique creuse, présente à ses extrémités périphériques des rebords d'accrochage 8 et 9 des talons d'une enveloppe de pneumatique, non représentés.

La jante 2 comporte également de façon classique un siège 11 de réception de l'un des talons, situé entre le rebord 9 et un bossage 10 de maintien en position dudit talon, couramment désigné par le mot anglais "hump", et une gorge 13 reliée au siège 11 par un tronçon annulaire de jante 12.

Dans la suite de la description, on désignera les éléments communs aux différentes figures par les mêmes références.

La déformation due à la pression de gonflage des pneumatiques, se répartit de part et d'autre du tronçon 12 au niveau duquel se situe la liaison entre la jante 2 et le disque 3. Cette déformation, comme on l'a précisé précédemment, est plus importante lorsque la jante est réalisée dans un matériau composite, et plus particulièrement dans le cas de matériaux thermoplastiques, que dans un métal. Or les contraintes d'encombrement des disques de freins, de poids des roues et d'équilibre, que doivent respecter les roues hybrides ne permettent pas de réaliser une augmentation d'épaisseur de la jante.

Cette déformation se traduit notamment par un affaissement des rebords 8 et 9 et de la partie de la jante 2 située respectivement entre le tronçon 12 et le rebord 8, et entre le tronçon 12 et le rebord 9. Bien entendu l'affaissement est plus substantiel pour le rebord 8 et la zone de la jante 2 comprise entre ledit rebord et le tronçon 12, dans la mesure où ce rebord 8 est plus éloigné du tronçon 12. Dans le but d'éviter que cet affaissement soit trop important, il est nécessaire d'avoir une plus grande rigidité du rebord 8.

Néanmoins une trop grande rigidité des rebords d'accrochage risquerait d'entraîner, lors de l'application de la contrainte constituée par la pression de gonflage des pneumatiques sur la jante 2, une déformation de la jante 2 correspondant à un affaissement de la partie centrale de la jante 2 vers le centre de la roue 1, ce qui n'est pas non plus souhaitable.

Ainsi, afin que la jante 2 constitue un support suffisamment rigide pour l'enveloppe de pneumatique, le rebord 8 possède une section axiale en U s'étendant sur toute la circonférence de la jante. Cette forme particulière permet tout en augmentant la masse au niveau du rebord d'accrochage 8 et donc la rigidité, de préserver une certaine flexibilité du rebord. De plus, la demanderesse a constaté de manière surprenante qu'aucun renfort supplémentaire à cette structure en U n'était nécessaire pour assurer la rigidité.
Comme on l'a vu précédemment, le phénomène d'affaissement existant également au niveau du rebord d'accrochage 9 bien que moins amplifié que pour le rebord d'accrochage 8, il est intéressant de renforcer la rigidité du rebord 9.

Par ailleurs, la déformation due à la pression de gonflage des pneumatiques se traduit également par une rétreinte uniforme en diamètre de la jante 2. Afin de limiter cette rétreinte, il est important que la section axiale des rebords d'accrochage 8, 9 soit suffisamment grande.

Le renforcement permettant de répondre à ces deux conditions correspond à l'exemple de réalisation présenté sur la figure 1, dans lequel les deux rebords d'accrochage 8 et 9 ont une section axiale en U. On aurait également pu envisager de réaliser des rebords d'accrochage 8 et 9 qui comporteraient à la place d'une section en U, une forme pleine d'épaisseur beaucoup plus importante que le reste de la jante 2. Bien entendu une telle solution serait intéressante du point de vue de la rétreinte circonférentielle mais, en plus du risque d'obtenir une trop grande rigidité, comme expliqué précédemment, une telle réalisation pose d'autres problèmes.

En effet, pour des raisons de coût, de rapidité d'exécution et de simplicité, le procédé de fabrication de la jante le plus intéressant est le moulage par injection. Or il est important pour que ce dernier soit correctement réalisé, que la vitesse d'avancement du matériau dans le moule soit sensiblement la même en tout point afin de garantir une homogénéité de la pièce réalisée. Dans le cas de rebords d'accrochage très épais, on obtient des vitesses très différentes selon la hauteur, dans le rebord, à laquelle se situe le matériau qui s'écoule. De plus, le phénomène de retrait qui se produit lors du refroidissement du matériau, est alors plus important au coeur de la pièce qu'en surface, ce qui se traduit par un défaut sur la pièce.

Pour chaque rebord d'accrochage, la forme en U de sa section axiale est constituée par les branches extérieure U1 et intérieure U3 du U reliées par un segment U2. Les branches U1 et U3 de chaque U sont sensiblement parallèles à l'axe de la roue 1 et s'ouvrent vers l'extérieur de ladite roue. Ainsi, les parois annulaires 81 et 82 du rebord d'accrochage 8 ayant pour section axiale respectivement la branche extérieure U1 et le segment U2 correspondent sensiblement à la forme d'un rebord d'accrochage classique, alors que la paroi annulaire 83 ayant pour section axiale la branche intérieure U3 constitue une nervure de renfort annulaire radiale. Il en est de même pour le rebord d'accrochage 9 dont les parois sont numérotées 91, 92 et 93 par analogie à celles du rebord 8.

Grâce à cette section axiale en U des rebords d'accrochage 8 et 9, l'effet de la pression de gonflage du pneumatique ne pourra provoquer qu'une faible déformation sur la jante 2 qui préservera néanmoins le profil de ladite jante.

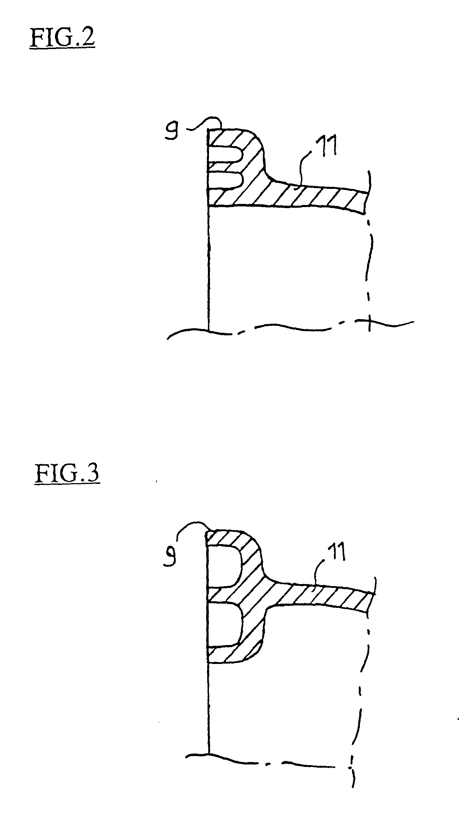

Bien entendu, les rebords d'accrochage 8 et 9 peuvent avoir une section axiale présentant plusieurs cavités en U. On peut envisager des rebords d'accrochage 8 et 9 dont la section axiale présentent une forme de râteau constituant ainsi plusieurs cavités en U, comme le montrent les figures 2 et 3 qui présentent des sections axiales ayant deux cavités en U.

La position de ces cavités par rapport au siège 11, et plus précisément de la branche du U situé vers l'extérieur de la jante 2, est fonction de la hauteur nécessaire des rebords pour permettre un accrochage optimal des talons de l'enveloppe de pneumatique. La disposition des autres branches délimitant les deux cavités en U peut être réalisée selon plusieurs variantes telles que présentées, à titre d'exemple, sur les figures 2 et 3 :
- l'une (figure 2) équivaut à une séparation en deux d'une cavité en U telle que représentée à la figure 1,
- l'autre (figure 3) équivaut à un doublement d'une cavité en U telle que représentée à la figure 1, vers l'intérieur de la jante 2.

Par ailleurs, ces nouvelles structures de rebord d'accrochage peuvent également être avantageuses pour des aspects tout à fait différents de la déformation, tels que, à titre d'exemple, permettre le clipsage d'un enjoliveur dans une cavité du rebord d'accrochage concerné.

L'assemblage entre la jante 2 et le disque 3 peut être effectué par différentes techniques, cependant l'invention se prête particulièrement bien à la réalisation d'un assemblage dans lequel le disque 3 est encastré dans la jante 2 en matériau composite. Un tel assemblage est réalisé par surmoulage de la jante 2 sur le bord d'assemblage 6 porté par le disque 3, de sorte que ledit bord est inséré dans le tronçon annulaire 12. Afin de ne pas créer de points de fragilité dans le tronçon 12, le bord d'assemblage 6 s'étend radialement à l'intérieur dudit tronçon 12 sur toute la longueur de ce dernier.

Ainsi la roue 1 conforme à l'invention, possède à la fois les caractéristiques mécaniques et thermiques nécessaires, sans présenter de zone de grande fragilité. Cette roue réalise une liaison entre la jante et le disque solide et fiable.

On décrira brièvement le procédé de fabrication d'une roue conforme à l'invention. Il consiste dans une première étape à fabriquer le disque métallique 3. Cette fabrication peut se faire classiquement par emboutissage ou tout autre technique connue.

Le disque 3 peut être constitué par un métal tel qu'un acier, de l'aluminium, du magnésium ou un alliage d'aluminium ou de magnésium. L'épaisseur du disque 3 ainsi que les autres caractéristiques du matériau sont choisies en fonction des caractéristiques du véhicule sur lequel la roue doit être montée.

Le disque 3 obtenu est alors positionné dans un moule qui entoure son bord d'assemblage 6 assurant l'étanchéité entre la partie du disque 3 à surmouler et le reste du disque 3.

Dans une seconde étape, le matériau composite constitutif de la jante 2 est injecté dans le moule de préférence par plusieurs points afin d'avoir une homogénéité de répartition du matériau dans la jante 2. Le matériau se répartit ainsi dans toute la jante 2.

Différents matériaux composites peuvent convenir tels que, à titre d'exemple, une résine chargée en fibres longues ou un thermoplastique chargé en fibres courtes. Cependant les matériaux thermoplastiques chargés ou non, conviennent particulièrement car le temps de cycle nécessaire à l'opération de surmoulage est beaucoup plus court que dans le cas d'un matériau thermodurcissable. De nombreux matériaux thermoplastiques peuvent être utilisés pour réaliser cette jante, on citera à titre d'exemple le polyamide 6.6 renforcé par des fibres de verre.

Ce procédé de fabrication simple et peu coûteux, permet de réaliser des roues dans un temps de cycle très court, il est par conséquent très intéressant au niveau industriel.

De plus, ce procédé permet pour des jantes de même dimensions, de réaliser des roues avec une grande variété de combinaisons offertes en changeant le dessin du disque mais en conservant la même géométrie pour le bord d'assemblage.

## Revendications

1. Roue pour véhicules automobiles, qui comprend une jante (2) en matériau composite et un disque (3) métallique assemblés l'un avec l'autre, **caractérisée par** le fait que la jante (2) porte des rebords d'accrochage (8, 9) dont l'un au moins possède une section axiale présentant au moins une cavité en U s'étendant sur toute la circonférence de la jante.

2. Roue selon la revendication 1, **caractérisée par** le fait que les branches (U1, U3) du U sont sensiblement parallèles à l'axe de la roue (1) et s'ouvrent vers l'extérieur de ladite roue.

3. Roue selon l'une quelconque des revendications 1 ou 2, **caractérisée par** le fait que la section axiale de chacun des rebords d'accrochage présente au moins une cavité en U.

4. Roue selon l'une quelconque des revendications 1 à 3, **caractérisée par** le fait que la section axiale d'un, au moins, des rebords d'accrochage (8, 9) présente plusieurs cavités en U.

5. Roue selon l'une quelconque des revendications 1 à 4, **caractérisée par** le fait que la jante (2) est formée par un matériau thermoplastique.

6. Roue selon l'une quelconque des revendications 1 à 5, **caractérisée par** le fait que la jante (2) est réalisée par moulage.

7. Roue selon la revendication 6, **caractérisé par** le fait que la jante (2) est surmoulée sur un bord d'assemblage (6) porté par le disque (3).

## Patentansprüche

1. Rad für Kaftfahrzeuge, das eine Felge (2) aus Verbundmaterial und eine Scheibe (3) aus Metall aufweist, die miteinander zusammengebaut sind, **dadurch gekennzeichnet, daß** die Felge (2) Ankoppelungsränder (8, 9) aufweist, von denen mindestens einer einen Axialschnitt aufweist, der mindestens eine U-förmige Höhlung darbietet, die sich über den gesamten Umfang der Felge erstreckt.

2. Rad nach Anspruch 1, **dadurch gekennzeichnet, daß** die Arme (U1, U3) des U im wesentlichen parallel zur Achse des Rades (1) verlaufen und sich zur Außenseite des genannten Rades hin erstrecken.

3. Rad nach irgendeinem der Ansprüche 1 oder 2, **dadurch gekennzeichnet, daß** der Axialschnitt eines jeden der Ankoppelungsränder mindestens eine U-förmige Höhlung darbietet.

4. Rad nach irgendeinem der Ansprüche 1 bis 3, **dadurch gekennzeichnet, daß** der Axialschnitt mindestens eines der Ankoppelungsränder (8, 9) mehrere U-förmige Höhlungen darbietet.

5. Rad nach irgendeinem der Ansprüche 1 bis 4, **dadurch gekennzeichnet, daß** die Felge (2) aus einem thermoplastischen Material gebildet bzw. geformt ist.

6. Rad nach irgendeinem der Ansprüche 1 bis 5, **dadurch gekennzeichnet, daß** die Felge (2) durch Abformung hergestellt ist.

7. Rad nach Anspruch 6, **dadurch gekennzeichnet, daß** die Felge (2) auf einen Anbaurand (6) aufgeformt ist, der von der Scheibe (3) getragen ist.

## Claims

1. A wheel for motor vehicles, which comprises a rim (2) of composite material and a metal disc (3) assembled together, **characterised by** the fact that the rim (2) has bead retaining flanges (8, 9), at least one of which has an axial section having at least one U-shaped cavity extending over the entire circumference of the rim.

2. A wheel according to Claim 1, **characterised by** the fact that the arms (U1, U3) of the U are substantially parallel to the axis of the wheel (1) and open towards the outside of said wheel.

3. A wheel according to one of Claims 1 or 2, **characterised by** the fact that the axial section of each of the retaining flanges has at least one U-shaped cavity.

4. A wheel according to one of Claims 1 to 3, **characterised by** the fact that the axial section of at least one of the retaining flanges (8, 9) has several U-shaped cavities.

5. A wheel according to any one of Claims 1 to 4, **characterised by** the fact that the rim (2) is formed of a thermoplastic material.

6. A wheel according to any one of Claims 1 to 5, **characterised by** the fact that the rim (2) is produced by moulding.

7. A wheel according to Claim 6, **characterised by** the fact that the rim (2) is moulded over an assembly edge (6) of the disc (3).
